Europäisches Patentamt

European Patent Office

Office européen des brevets

(19)

(11) Publication number: **0 085 257**
**A2**

## (12) EUROPEAN PATENT APPLICATION

(21) Application number: 82306963.8

(22) Date of filing: 24.12.82

(51) Int. Cl.³: **B 60 R 25/00**

(30) Priority: 28.01.82 GB 8202472
17.03.82 GB 8207843

(43) Date of publication of application:
10.08.83 Bulletin 83/32

(84) Designated Contracting States:
DE FR GB IT NL SE

(71) Applicant: Thomas, Malcolm Alfred
53 Selsdon Close Avenue Elmers
Surbiton Surrey(GB)

(71) Applicant: Kienesberg, John Edward
26 River Court Portsmouth Road
Surbiton Surrey(GB)

(72) Inventor: Thomas, Malcolm Alfred
53 Selsdon Close Avenue Elmers
Surbiton Surrey(GB)

(72) Inventor: Kienesberg, John Edward
26 River Court Portsmouth Road
Surbiton Surrey(GB)

(74) Representative: Turner, Paul Malcolm
PAUL M. TURNER AND COMPANY European Patent
Attorneys 47 Marylebone Lane
London W1M 6DL(GB)

(54) Vehicle immobilizing device.

(57) A vehicle immobilizing device comprises at least two arms 411, 412 forming at least one slot therebetween to receive one or more vehicle control pedals, means 418 for locking the control pedal within the arms, at least one leg 413, 414 extending from the arms capable of cooperating with the body of the vehicle to prevent travel of the control pedal or pedals when the pedal or pedals are positioned within the slot. The device 410 has two upright leg members 413, 414 separated by arms 411, 412 each permanently attached to one of the upright leg members and slidable through the other. The arms 411, 412 are locked in position around the control pedals (not shown) by means of a padlock passing through the hole 418.

FIG.4

EP 0 085 257 A2

-1-

## VEHICLE IMMOBILIZING DEVICE

The present invention relates to a vehicle immobilizing device. In particular, the invention relates to a device which prevents a control pedal such as the clutch and/or the foot brake of a vehicle from being used.

GB2023520 describes an anti-theft locking arrangement for motor vehicles which has lockable means for the driver's controls to disable the transmission of power to the road wheels. The arrangement comprises of a two-part locking device which has one part permanently secured to the floor or steering column. The second part is movable with regard to the first part. The present invention attempts to overcome the disadvantage of GB2023520 by providing

-2-

a complete self-contained locking device separate from the vehicle.

GB2043005 describes a complex T-shaped member having a tubular member slidable within the T-shaped member. The range of movement is limited by the stud which engages the slot, the stud providing a significant weakness in the locking device.

According to the present invention, there is provided a vehicle immobilizing device comprising at least one control pedal clamping arm capable of passing over, under or through at least one vehicle control pedal, and a support leg extending from the clamping arm to prevent travel of the control pedal when the device is locked in position.

The present invention provides a vehicle immobilizing device comprising at least two arms forming at least one slot therebetween to receive one or more vehicle control pedals, means for locking the control pedal within the arms. at least one leg extending from the arms capable of cooperating with the body of the vehicle to prevent travel of the control pedal or pedals when the pedal or pedals are positioned within the slot.

The present invention also provides a vehicle immobilizing device comprising an arm extending through one or more control pedals and having means for locking the arm in place such that the arm prevents substantial movement of the pedal or pedals.

The present invention further provides a vehicle immobilizing device comprising an arm and extending substantially perpendicularly therefrom, a leg, the arm being capable of extending through one or more

-3-

control pedals and having means for locking the arm in place, the leg extending sufficiently from the arm to prevent the pedal or pedals from being depressed.

In one embodiment, this invention is a device having an upper case T-shape. In use, the T-shape would be positioned sideways. In this position, the upper cross of the T is divided into two arms to form a slot in which the control pedal is received. The pedal can be secured within the arm, for example, by means of a padlock, or pin and padlock, passed through two holes in each of the divided arms on the T. The lower cross of the T extends away from the pedal and forms a leg which rests against the floor of the vehicle preventing the pedal from being depressed.

In a second embodiment of the vehicle immobilizing device, a modification of the T-shape is provided in the form of a lower case h. In this case, two legs jam against the vehicle floor, the upper extension of the h between, divided to receive and lock the pedal in position, the crossbar of the h being used to retain a second pedal. Again the pedal is secured with the arms, for example, by means of a padlock or a pin and padlock.

In another embodiment of the invention, the basic shape of the device is in an upper case F shape. In this case, the two arms extend laterally to form a slot to receive and lock one or more pedals in position, for example, by means of a padlock, or a pin and padlock. The leg of the F extends to the floor of the vehicle to prevent the pedal from being depressed, thus immobilizing the vehicle.

In the embodiment of this invention whereby the arm extends through the control pedal or pedals, one or more of these has a hole therethrough. The hole may be through the pedal arm itself or through a lug attached to the top or bottom of the control pedal arm. The control pedals may be suspended from beneath the steering column of the vehicle, such that they extend through the bulkhead of the vehicle. Alternatively, the pedals in some vehicles extend from the floor such that the arm may pass through the control pedals or a lug on the control pedals near to the floor to prevent them being depressed.

In one embodiment, the present invention is a device generally L-shaped, the L being canted by approximately 90° in use, such that one stroke of the L forms the arm, whereas the other forms the leg. The L shape generally has depth to it such that in cross-ection the arm is rectangular or square in shape. The arm is passed through a slot in the clutch and/or brake pedal and has a hole at or near its extremity such that it can be locked in position by means of a padlock. The second stroke of the L shape forms the leg, which in position extends from the arm towards the floor or bulkhead of the vehicle such that it will jam against the floor or bulkhead preventing the operation of one or both of the pedals.

In another embodiment, the present invention may be made of an I-shape, the arms of which are circular in shape or cross-section. In this instance, the stroke of I which forms the leg will have a foot attached thereto to prevent rotation of the arm, causing the leg to rotate, such that the pedals may be depressed. It should be understood that the locking device may have a foot attached to the leg

-5-

of the L-shape, even if the cross-section of the material is square or rectangular.

The material from which the device is made is preferably stainless steel or hardened steel. However, any hard material which is difficult to cut or changed in shape is satisfactory for this device. In the first two embodiments, the material may be made of a solid square bar such as 1" (25.4 mm) bar of stainless steel, the slot being cut into the bar to receive the pedals. The parts of the T-shape are generally welded together in the most convenient manner. The holes for the padlock may be drilled once the slot has been formed. The padlock may or may not be supplied with the vehicle immobilizing device.

The material of the device may be plastic coated if necessary. As an alternative to the square solid material, a square or circular tube may be provided and be equally effective as a locking device.

Although the legs have been shown as bars, it is also possible that a plate material may be used to form a leg in the form of a web or quadrant to prevent twisting of the device from its jammed position.

In the case of a vehicle with a conventional gear box, the devices above will preferably be used on the clutch alone or together with the brake, immobilizing one or both of these pedals. As an automatic gear box has only a brake and an accelerator pedal, one or both of these may be immobilized.

The present invention will be further described, by way of example only, with reference to the accompanying drawings, in which:-

Figure 1 is a perspective view of a T-shaped version;

Figure 2 is a perspective view of a modified T-shaped version of this invention, in use;

Figure 3 is a perspective view of an F-shaped version of this invention;

Figure 4 is a perspective view of a further embodiment of this invention;

Figure 5 is a perspective view of the embodiment of Figure 4 with the addition of a steering wheel locking bar;

Figure 6 is a diagrammatic view of the device of Figure 4;

Figure 7 is a perspective view of an embodiment of the present invention;

Figure 8 is a perspective view of a further embodiment ;

Figure 9 is a perspective view of another embodiment of the present invention; and

Figure 10 is a perspective view of a modification of the embodiment shown in Figure 9.

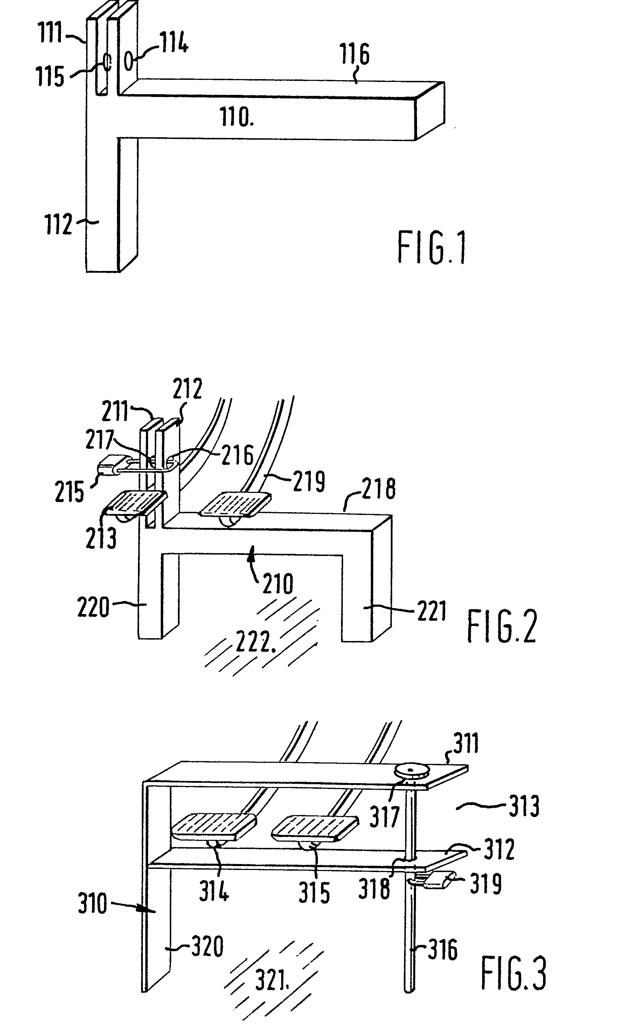

Referring to Figure 1, the basic locking device 110 is in the shape of a T lying on its side. The cross of the T has an upper part 111 and a lower part 112 forming a leg. The upper part 111 is divided into two to form a slot 113 for receiving a control pedal of a vehicle (more particularly, as shown in Figure 2). The dimension of the slot 113 may vary according to the vehicle intended to be immobilized. Each part of the divided upper arm 111 has a hole 114,115 therethrough to receive a locking device, preferably a padlock. Any locking device is suitable.

However, the immobilizing device is more secure if a hardened steel padlock is used. The locking device 110 may be made of hardened steel, stainless steel etc. and is generally welded into its basic shape. The cross-section of each part of the locking device may vary. It may be square, i.e. 1" (25.4 mm) stainless steel or 1" (25.4 mm) circular hardened steel. A flat bar or rectangular cross-sectioned material may also be used in any embodiment of the invention, as specifically illustrated in Figure 3. The whole device may be plastic coated or painted to make it aesthically more pleasing.

In use, a pedal which may be the clutch or brake pedal is received with the slot between the arms 111 and locked into position by means of a padlock (not shown). A second pedal, e.g. the brake or the accelerator pedal rests on the main crossbar 116 of the T. The leg 112 is jammed against the floor of the vehicle and annot be removed because of the pedal locked in the slot.

Referring to Figure 2, the locking device 210 has the same basic shape as the device 10 shown in Figure 1, except the whole shape appears to be in the form of a lower case h. The upper extension of the h is divided into two arms 211,212 to receive the pedal 213 of the vehicle. The pedal is secured within the arms 211,212 by a padlock 215, which may be sold as an integral part of the locking device 210, or as a separate item. To secure the pedal, the padlock 215 is passed through two holes 216,217. The crossbar 218 provides an immobilizing action for a second pedal 219. In the case of an automatic vehicle, the two pedals immobilized will be the brake and accelerator pedal. In the case of a vehicle

-8-

with a conventional clutch and gear box, the preferred pedals for immobilization would be the clutch pedal and the brake pedal.

The device shown in Figure 2 differs from Figure 1 in that it has two legs 220,221 capable of being jammed against the floor of the vehicle 222 for added security.

The device 310, as shown in Figure 3, is in the form of an F-shape. The two arms 311,312 extend laterally to form a slot 313 to receive one or two pedals 314,315. To lock them in position, a pin 316 extends through holes 317,318 at the extremities of the arms. The pin 316 is locked into position by means of a padlock 319. Alternatively, if the slot 313 between the arms 311 is small, in the case of narrow pedals, a padlock may be passed through holes 317 and 318. When a pin 316 is used it may extend to jam against the vehicle floor 321 in conjunction with the leg 320.

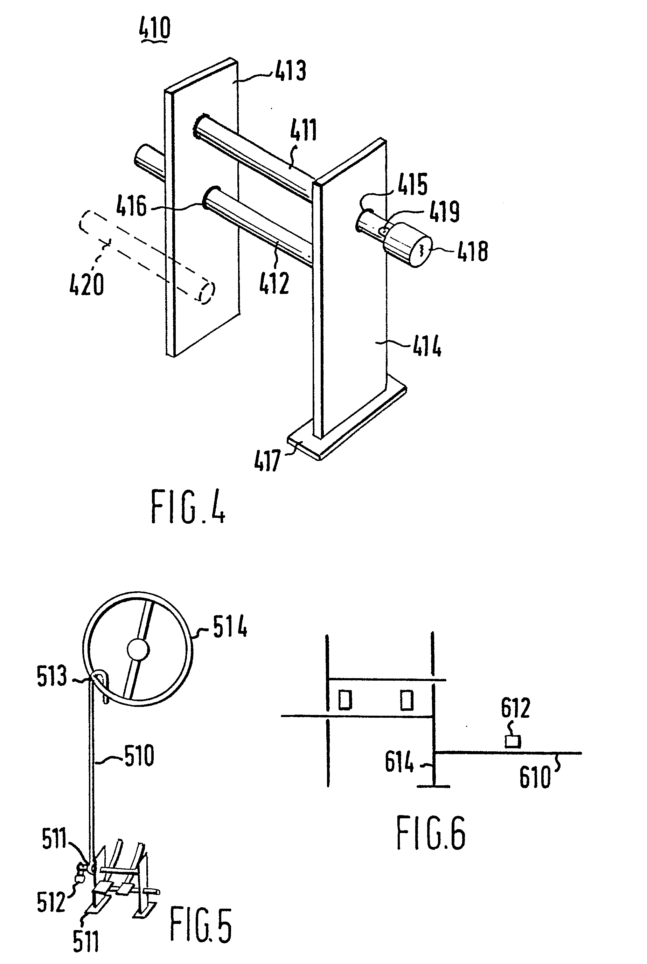

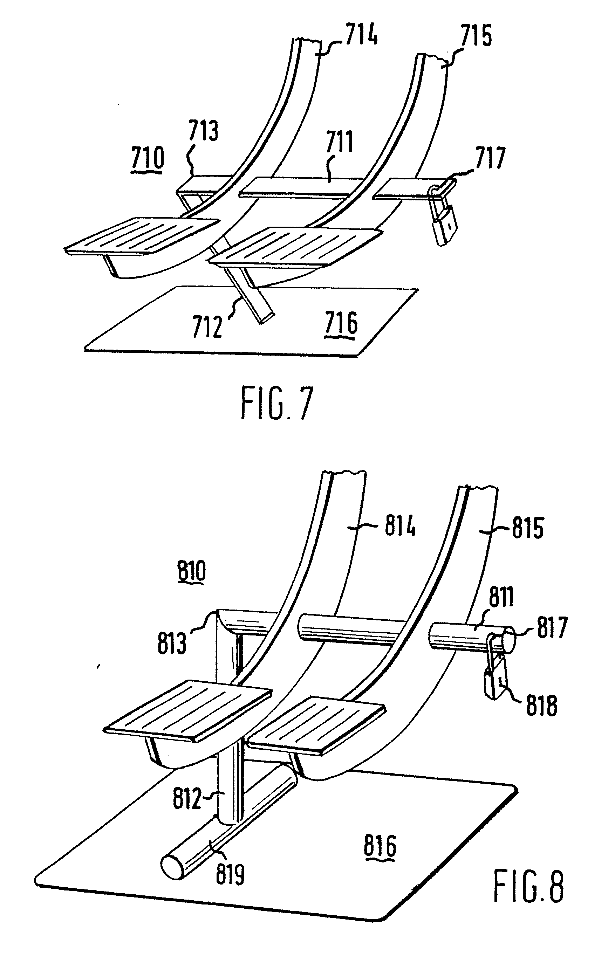

Referring to Figure 4, the basic locking device 410 has an upper cross member 411 and a lower cross member 412, the upper cross member being permanently attached to a side support 413 being slidable through a second side support 414 to which the lower cross member 412 is permanently secured. Each of the cross members 411 and 412 is secured to side supports 413 and 414 respectively which are preferably of flat bar sectioned material. Each of the cross members 411 and 412 slides through a corresponding hole 415 and 416 in the opposite cross member to which it is attached. The cross members 411 and 412 are preferably round in cross-sectioned material although material of square or rectangular cross section may also be used. Thus, the apparatus may be dis-assembled to form a single upright piece 413 or 414 with a cross member 411 or 412 respectively. Each of the uprights may have a base plate 417 welded to it such that it forms a perpendicular upright from the base plate. The base plate may be shaped to be adapted to a particular vehicle's shape of floor. In use the two parts of the device 410 are separated. The upper crossbar 411 is passed above the clutch and brake pedals (not shown) and through the hole 416 in the upright 414. At the same time the lower cross piece 412 is passed underneath the brake and clutch pedals and through the hole 415 in the upright 413. A lock 418 can be passed through the hole 419 locking the whole device without the device being permanently attached to the vehicle. An optional extension 420 may hold the accelerator pedal in an inoperable position. The size, arrangement and cross-section of the components of the device will be altered according to the size and arrangement of the vehicle controls upon which it is to be used. The device may be made adjustable by providing one or more holes in the cross member 411 for locking devices such as padlocks. In addition, an optional steering wheel bar may be used as is shown in Figure 5. The steering wheel bar 510 may be made of square shaped section steel bar which is tempered. At one end of the bar is a receiving portion 511 which slides over the crossbar 411 as shown in Figure 4 and is locked in position between the side piece 414 and the padlock 512 which passed through the hole 418. The steering wheel bar has a hooked shaped extension 513 which engages around a steering wheel 514 prior to being slid onto the crossbar 411. The hooked shaped extension may be bent or welded into the required shape.

In addition to the steering wheel bar a further optional extension piece, as is shown in Figure 6 can keep the accelerator pedal from being depressed. In this instance the arrangement as shown in Figure 6 has an extension crossbar 610 which passes underneath the accelerator pedal 612 and has an extension leg 614 which engages the floor and prevents the accelerator 612 from being depressed.

Referring to Figure 7, the locking device 710 is in the shape of an L lying on its side with an arm 711 and leg 712. The locking device can be made of stainless steel or hardened steel as indicated above. The locking device 710 may be made of one piece of steel rectangular in cross-section, bent at junction 713, or be made of two pieces of steel welded at junction 713. It is important that the material retains its integrity at this point, i.e. the weld or bend at junction 713 is not a weak point. The clutch pedal 714 and the brake pedal 715 each have a slot therein such that arm 711 of the locking device can pass therethrough. The position of the slot is such that it can receive the arm 711 so that the leg 712 extends to and preferably abuts the vehicle floor 716. A hole 717 allows a padlock to pass through to secure the device in position such that it cannot be withdrawn from the slots in the pedals 714 and 715. In use, if the pedals 714 and/or 715 are depressed, then the leg 712 jams the device against the vehicle floor 716 preventing operation of the vehicle.

Referring to Figure 8, device 810 is of circular cross-section and has an arm 811 and a leg 812 joined by a weld or a bend at junction 813. The arm 811 passes through holes in the pedals 814 and 815. The leg 812 extends to the floor of the vehicle 816.

The arm is locked in place by means of a padlock 818 passing through a hole 817 in the arm at or near its extremity. This prevents the pedals 814 and 815 from being depressed. To prevent rotation of the arm 810, the leg 812 extends into a foot 819, preferably welded, which is positioned against the floor of the vehicle.

In use the device is passed through the holes in the pedals 814 and 815 and the foot 819 is jammed against the floor or bulkhead of the vehicle preventing travel of the pedals.

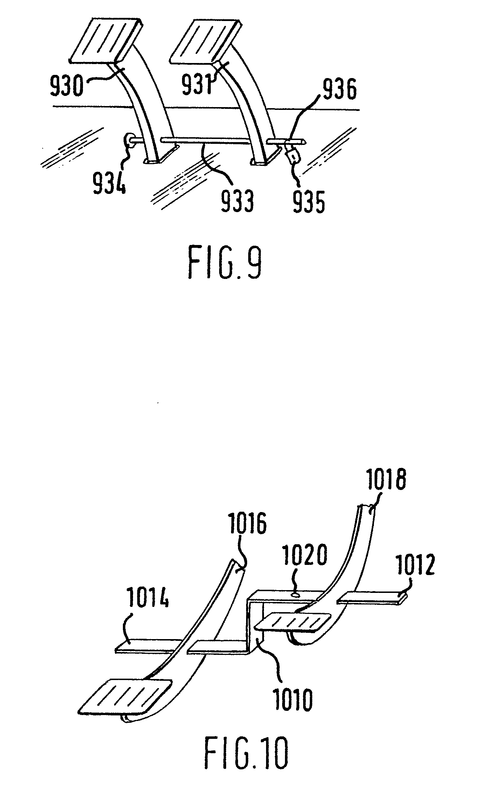

Referring to Figure 9, pedals 930,931 extend from the floor of the vehicle. Arm 933 passes through a hole in each of the pedals and has at one end a flange 934 larger than the hole in the pedal 930 to prevent the arm 933 passing through. At the other end, a locking means is provided. This comprises a padlock 935 passing through a hole 936 in the arm 933.

The device as shown in Figure 10 may have a crank 100 in the cross intermediate the two pedals 1016 and 1018 such that the clutch pedal 1016 may be held depressed. The crank 1010 must be intermediate the clutch and brake pedals to allow the cross members 1012 and 1014 to first slide into the clutch by having the crank 1010 closely adjacent to the brake pedal such that the member 1014 may slide to the clutch pedal sliding the bar along until the crank is closely adjacent to the clutch pedal such that the member 1012 may slide to the brake pedal and return the crank 1010 to the intermediate position between the brake and clutch pedals. The padlock hole 1020 is positioned such that the padlock locks the device in the intermediate position between the clutch and brake pedals. In this instance the position of the padlock hole is important to prevent each of the members 1012 and 1014 from sliding from their respective pedals once the padlock (not shown) has been applied.

The steering wheel holding bar as described in conjunction with Figure 5 may also be used in conjunction with any of the other devices of the present invention which may pass through the control pedals or around the control pedals. For example, in the device of Figure 10 the steering wheel holding bar may be positioned between the crank 1010 and the locking hole 1020.

It will be understood that the devices shown in the figures can be made in an adjustable form to accommodate different arrangements and sizes of control pedals in vehicles to be immobilized. For example, as shown in Figure 1, one of the vertical arms may be slidably mounted on the bar 116. As shown in Figure 2, the vertical arm 212 may be slidably mounted on the horizontal arm 218. Various adjustable versions of the various embodiments are possible. For example, one way of making the device of Figure 3 adjustable would be to arrange the top arm 311 such that it has a slot to slidably receive the vertical portion of the F forming the leg 320. Alternatively, the arm 312 maybe slidably mounted on the leg 320.

It will be understood by a person skilled in this art that many variations of the basic shapes of this invention are possible such that the control pedals of a vehicle are immobilized.

-13-

## CLAIMS

1. A vehicle immobilizing device comprising at least one control pedal clamping arm capable of passing over, under or through at least one control pedal, and a support leg extending from the clamping arm to prevent travel of the control pedal when the device is locked in position.

2. A vehicle immobilizing device comprising at least two arms forming at least one slot therebetween to receive one or more vehicle control pedals, means for locking the control pedal with the arms, at least one leg extending from the arms capable of cooperating with the body of the vehicle to prevent travel of the control pedal or pedals when the pedal or pedals are positioned within the slot.

3. A device as claimed in claim 2 in the form of a T shape, which in use is positioned sideways and the upper cross of the T has two arms to restrain a control pedal therebetween, and the lower cross of the T forms a leg to jam the device against the vehicle floor.

4. A device as claimed in claim 2 which is in the form of a lower case h, and which in use, the upper extension of the h has two arms to receive a control pedal, and the lower extensions form legs to jam the device against the vehicle floor.

5. A device as claimed in claim 2 which is in the form of an F shape, which in use, the lateral arm of the F receives a control pedal and the vertical part of the F forms a leg to jam the device against the vehicle floor.

6.    A device as claimed in claim 2 having two legs each leg having an arm extending perpendicularly therefrom, each arm being slidably engageable through a hole in the opposite leg, the control pedal or pedals being received between the arms, the arms being capable of being locked in position.

7.    A vehicle immobilizing device comprising an arm and extending substantially perpendicularly therefrom, a leg, the arm being capable of extending through one or more control pedals and having means for locking the arm in place, the leg extending sufficiently from the arm to prevent the pedal or pedals from being depressed.

8.    A device as claimed in any one of the preceding claims wherein the control pedal is immobilized by a padlock closing the arms of the device.

1/4

0085257

FIG.1

FIG.2

FIG.3

FIG.4

FIG.5

FIG.6

0085257

FIG. 7

FIG. 8

FIG.9

FIG.10